# EUROPÄISCHE PATENTSCHRIFT

(11) **EP 2 382 411 B1**
(45) Veröffentlichungstag und Bekanntmachung des Hinweises auf die Patenterteilung: **17.07.2013**
(21) Anmeldenummer: 10702459.8
(22) Anmeldetag: 21.01.2010
(51) Int. Cl.: F16K 37/00, F15B 20/00, G05B 23/02

(54) **STELLEINRICHTUNG MIT EINEM AUF/ZU-VENTIL**
ACTUATOR DEVICE HAVING AN OPEN/CLOSE VALVE
DISPOSITIF DE REGLAGE AVEC VANNE MARCHE/ARRET

(30) Priorität: 28.01.2009 DE 102009006533
(43) Veröffentlichungstag der Anmeldung: 02.11.2011
(73) Patentinhaber: Siemens Aktiengesellschaft, 80333 München (DE)
(72) Erfinder: HEER, Klaus-Peter, 76863 Herxheim (DE)
(86) Internationale Anmeldenummer: PCT/EP2010/050665
(87) Internationale Veröffentlichungsnummer: WO 2010/086271

(56) Entgegenhaltungen:
- WO-A1-2008/135417
- JP-A- 60 031 602
- US-A1- 2004 250 861

## Beschreibung

Die Erfindung betrifft eine Stelleinrichtung mit einem Auf/ Zu-Ventil, das über einen pneumatischen Stellantrieb mittels eines an dem Auf/Zu-Ventil angreifenden Stellelements verstellbar ist, einem Positionsgeber, der die Ist-Position des Stellelements erfasst, und einem elektro-pneumatischen Stellungsregler, der über einen Zuluft-Eingang mit Druckluft versorgt wird und in Abhängigkeit von der Ist-Position und einer Soll-Position an einem Stelldruck-Ausgang einen Stelldruck erzeugt, der dem Stellantrieb über ein aktiviertes Magnetventil zugeführt wird, welches zu seiner Aktivierung mit einer Versorgungsspannung versorgt wird und im Notfall zur Entlüftung des Stellantriebs durch Abschalten der Versorgungsspannung deaktivierbar ist.

Eine solche Stelleinrichtung ist aus der WO 2008/138949 A1, US 2006/0219299 A1 oder der WO 2008/135417 A1 bekannt.

Das Auf/Zu-Ventil, insbesondere ein Notabschalt (ESD = Emergency Shut Down)-Ventil, wird mittels eines pneumatischen Stellantriebs entweder in eine Betriebsstellung, z. B. "auf", oder eine Sicherheitsstellung, z. B. "zu", gebracht. Ein Magnetventil, das mit einer z. B von einem Leitsystem gelieferten Versorgungsspannung aktiviert wird, verbindet den pneumatischen Antrieb mit einer Druckluftversorgung. Im Notfall wird die Versorgungsspannung abgeschaltet, um den pneumatischen Antrieb über das Magnetventil zu entlüften, so dass das Auf/Zu-Ventil aus der Betriebsstellung in die Sicherheitsstellung bewegt wird.

Um die Funktionsfähigkeit der Stelleinrichtung im Rahmen eines Partial-Stroke-Tests überprüfen zu können, erfolgt die Druckluftversorgung über einen elektro-pneumatischen Stellungsregler. Bei dem Partial-Stroke-Test wird das Auf/Zu-Ventil mittels des Stellungsreglers aus der Betriebsstellung über einen Teil seines Stellweges bewegt und anschließend wieder zurückbewegt. Die Stellungsänderung ist dabei so gering, dass der laufende Betrieb der Anlage, in der das Auf/ Zu-Ventil eingebaut ist, nur unwesentlich gestört wird und nicht unterbrochen werden muss. Während des Partial-Stroke-Tests wird die Stellbewegung erfasst und abgespeichert oder an das Leitsystem weitergemeldet.

Bei der aus der WO 2008/138949 A1 bekannten Einrichtung wird zum Testen des Magnetventils ein Magnetventil-Testsignal erzeugt, mit dem ein steuerbarer Schalter zur Unterbrechung der Spannungsversorgung des Magnetventils angesteuert wird, so dass dieses deaktiviert und in Folge der Stellantrieb entlüftet wird. Daraufhin bewegt sich das Stellelement bis zu einer vorgegebenen Stellung, bei deren Erreichen ein Grenzwertschalter öffnet und den Weg des Magnetventil-Testsignals zu dem steuerbaren Schalter hin unterbricht. Der steuerbare Schalter schließt daher wieder die Spannungsversorgung für das Magnetventil, welches dadurch aktiviert die pneumatische Verbindung zwischen dem Stellungsregler und dem Stellantrieb wieder herstellt, so dass die Bewegung des Stellelements gestoppt und umgekehrt wird. Dies führt zu einer Pendelbewegung des Stellelements, die solange andauert, wie das Magnetventil-Testsignal erzeugt wird, und die von dem Stellungsregler detektiert und an das das Leitsystem weitergemeldet wird.

Bei der aus der US 2006/0219299 A1 bekannten Einrichtung wird zum Testen des Magnetventils dieses durch Unterbrechen seiner Spannungsversorgung kurzzeitig deaktiviert und dabei die Druckdifferenz zwischen der mit dem Stellungsregler verbundenen Seite und der mit dem Stellantrieb verbundenen Seite des Magnetventils überwacht. Der Test des Magnetventils wird als erfolgreich bewertet, wenn bei dem kurzzeitigen Deaktivieren des Magnetventils der Druck auf der Seite des Stellantriebs signifikant abfällt, während der von dem Stellungsregler gelieferte Druck weitgehend unverändert bleibt.

Bei der aus der WO 2008/135417 A1 bekannten Einrichtung erfolgen der Partial-Stroke-Test und der Test des Magnetventils in einem einzigen Testablauf, indem das Magnetventil deaktiviert wird, die Stellbewegung des Stellelements mittels des Stellungsreglers erfasst und auf Erreichen einer vorgegebenen Wegänderung überwacht wird und bei Erreichen der vorgegebenen Wegänderung das Magnetventil wieder aktiviert wird.

In der Patentanmeldung PCT/EP2008/059316 wird zu Verringerung des technischen Aufwandes vorgeschlagen, den elektro-pneumatischen Stellungsregler unmittelbar, d. h. ohne Zwischenschaltung eines von der Versorgungsspannung steuerbaren Magnetventils, mit dem pneumatischen Stellantrieb zu verbinden. Stattdessen ist der Stellungsregler stromversorgungsseitig an der Versorgungsspannung angeschlossen und dazu ausgebildet, bei Ausfall der Stromversorgung den Stellantrieb zu entlüften. In dem Stellungsregler ist u. a. eine Routine zur Durchführung des Partial-Stroke-Tests hinterlegt.

Bei Stelleinrichtungen mit Auf/Zu-Ventil ermöglicht also der elektro-pneumatische Stellungsregler die Durchführung von Partial-Stroke-Tests und ermöglicht bzw. unterstützt den Test des Magnetventils. Die Sicherheit der Stelleinrichtung wird durch das Vorsehen des Stellungsreglers in keiner Weise gemindert, weil der Stellantrieb im Notfall immer über das Magnetventil entlüftet und so das Auf/Zu-Ventil in die Sicherheitsstellung gebracht wird. Jedoch kann die Verfügbarkeit der Stelleinrichtung durch das Vorhandensein des Stellungsreglers gemindert werden, wenn als Folge einer Störung des Stellungsreglers oder seiner elektrischen Versorgung die Druckluftversorgung des Magnetventils ausfällt und das Auf/ Zu-Ventil in Sicherheitsstellung gebracht wird, ohne dass ein Notfall vorliegt.

Gemäß der Erfindung wird dieses Problem dadurch gelöst, dass bei der Stelleinrichtung der eingangs angegebenen Art zwischen dem Zuluft-Eingang des Stellungsreglers und dem Magnetventil eine steuerbare Ventilanordnung liegt, die durch einen von dem Stellelement betätigbaren Positions-Grenzwertsensor und/oder einen den Stelldruck am Magnetventil erfassenden Druck-Grenzwertsensor angesteuert wird und das Magnetventil unmittelbar mit der Zuluft verbindet, wenn der Positions-Grenzwertsensor das Erreichen einer vorgegebenen Verfahrposition des Stellelements oder der Druck-Grenzwertsensor das Unterschreiten eines vorgegebenen Mindestdrucks detektieren.

Wenn also infolge einer Störung des Stellungsreglers dieser selbst entlüftet, wird dies durch einen entsprechenden Abfall des Stelldrucks am Magnetventil und/oder durch eine entsprechende Verfahrbewegung des Stellelements aus einer Betriebsstellung heraus detektiert, woraufhin die steuerbare Ventilanordnung derart angesteuert wird, dass das Magnetventil nicht mehr über den Stellungsregler sondern unmittelbar mit der Zuluft versorgt wird. Die Sicherheit der Stelleinrichtung wird dadurch in keiner Weise gemindert, weil der Stellantrieb nach wie vor im Notfall über das Magnetventil entlüftet und so das Auf/Zu-Ventil in die Sicherheitsstellung gebracht wird.

Vorzugsweise besteht die steuerbare Ventilanordnung aus einem zwischen dem Zuluft-Eingang, dem Stelldruck-Ausgang und dem Magnetventil liegenden Dreiwegeventil, das das Magnetventil entweder mit dem Stelldruck-Ausgang des Stellungsreglers oder unmittelbar mit der Zuluft verbindet.

Der Druck-Grenzwertsensor kann die Ventilanordnung unmittelbar mechanisch ansteuern. Es ist aber auch möglich, dass der Druck-Grenzwertsensor ebenso wie der Positions-Grenzwertsensor die Ventilanordnung elektrisch ansteuert. Dazu ist die Ventilanordnung elektrisch ansteuerbar und über den als Grenzwertschalter ausgebildeten Positions- oder Druck-Grenzwertsensor mit der Versorgungsspannung verbunden. Der in der Betriebsstellung des Stellelements bzw. bei ausreichend hohem Stelldruck geöffnete Grenzwertschalter schließt, wenn das Stellelement die vorgegebene Verfahrposition erreicht oder der erfasste Stelldruck den vorgegebenen Mindestdruck unterschreitet. Dadurch wird die Versorgungsspannung an die Ventilanordnung durchgeschaltet, welch daraufhin das Magnetventil unmittelbar mit der Zuluft verbindet. Wenn die Versorgungsspannung ausfällt, bleibt die Ventilanordnung unabhängig von der Schaltstellung des Grenzwertschalters deaktiviert und verbindet das Magnetventil mit dem Stelldruck-Ausgang des Stellungsreglers.

Wie bereits erläutert, führt ein stärkerer Abfall des von dem Stellungsregler für das Magnetventil bereitgestellten Stelldrucks zu einer Umschaltung der Ventilanordnung, indem diese das Magnetventil unmittelbar mit der Zuluft verbindet. Der Druck-Grenzwertsensor erfasst daraufhin wieder einen höheren Druck und das Stellelement bewegt sich wieder zurück in die Betriebsstellung, so dass auch die Ventilanordnung wieder zurückgeschaltet wird und das Magnetventil mit dem Stelldruck-Ausgang des Stellungsreglers verbindet. Wenn dann der von dem Stellungsregler für das Magnetventil bereitgestellte Stelldruck immer noch zu gering ist, wird die Ventilanordnung wieder umgeschaltet. Dieser Vorgang wiederholt sich so lange, wie die Störung des Stellungsreglers andauert. Es kommt dadurch zu einer Pendelbewegung des Stellelements, die vorzugsweise von dem Positionsgeber des Stellungsreglers erfasst und in dem Stellungsregler registriert und/oder von diesem als Fehler an das übergeordnete Leitsystem gemeldet wird. Alternativ oder ergänzend kann auch die periodische Schwankung des Stelldrucks von dem Druck-Grenzwertsensor erfasst und in dem Stellungsregler registriert und/oder von diesem als Fehler gemeldet werden.

Wenn der Positions- oder Druck-Grenzwertsensor wie oben erwähnt als Grenzwertschalter ausgebildet ist, kann zur Detektion des Fehlers oder der Störung des Stellungsreglers die Schalttätigkeit des Grenzwertschalters in einem Hilfsstromkreis (Meldestromkreis) erfasst werden.

In Bezug auf eine Stelleinrichtung, bei der der elektro-pneumatischen Stellungsregler unmittelbar ohne Zwischenschaltung eines von der Versorgungsspannung steuerbaren Magnetventils mit dem pneumatischen Stellantrieb verbunden ist, stromversorgungsseitig an der Versorgungsspannung angeschlossen ist und dazu ausgebildet ist, bei Ausfall der Stromversorgung den Stellantrieb zu entlüften, wird das der Erfindung zugrunde liegende Problem in analoger Weise dadurch gelöst, dass zwischen dem Zuluft-Eingang des Stellungsreglers und dem Stellantrieb eine elektrisch aktivierbare Ventilanordnung liegt, die im passiven Zustand den Stellantrieb mit dem Stelldruck-Ausgang und im aktiven Zustand unmittelbar mit der Zuluft verbindet und durch einen von dem Stellelement betätigbaren Positions-Grenzwertsensor und/oder einen den Stelldruck erfassenden Druck-Grenzwertsensor angesteuert wird, wobei der Grenzwertsensor als ein die Ventilanordnung mit der Versorgungsspannung verbindender Grenzwertschalter ausgebildet ist, der schließt, wenn das Stellelement die vorgegebene Verfahrposition erreicht oder der erfasste Stelldruck den vorgegebenen Mindestdruck unterschreitet.

Zur weiteren Erläuterung der Erfindung wird im Folgenden auf die Figuren der Zeichnung Bezug genommen, von denen
- Figur 1: ein erstes Ausführungsbeispiel der erfindungsgemäßen Stelleinrichtung mit Magnetventil,
- Figur 2: ein zweites Ausführungsbeispiel und
- Figur 3: ein weiteres Ausführungsbeispiel der erfindungsgemäßen Stelleinrichtung ohne Magnetventil zeigen, wobei gleiche oder entsprechende Teile mit übereinstimmenden Bezugszeichen versehen sind.

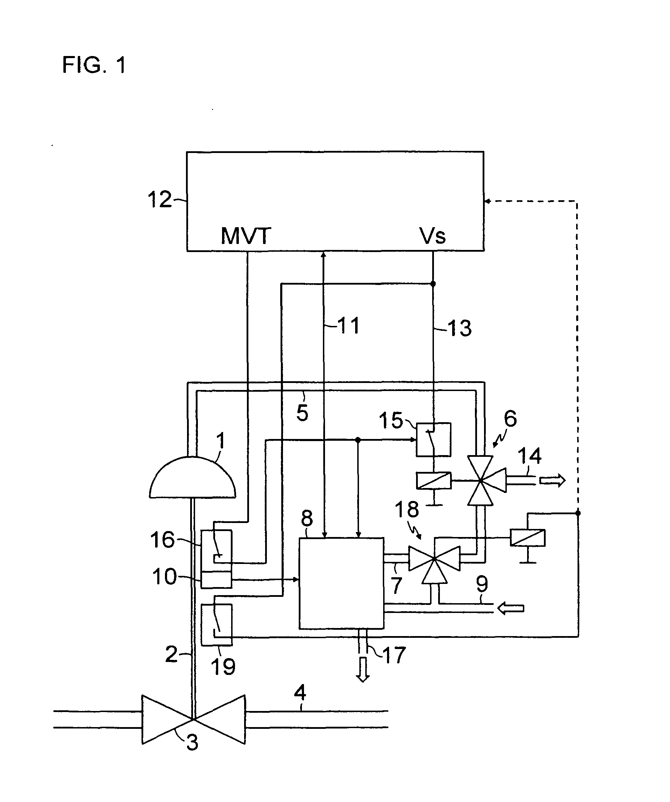

Figur 1 zeigt eine Stelleinrichtung mit einem pneumatischen Stellantrieb 1, der über ein Stellelement 2, hier in Form einer Hubstange, ein Auf-/Zu-Ventil 3 in einer von einem Fluid durchströmten Rohrleitung 4 betätigt. Das Auf-/Zu-Ventil 3 weist eine Betriebsstellung auf, in der es geöffnet oder geschlossen ist, und eine für den Notfall vorgesehene Sicherheitsstellung, in der es geschlossen bzw. geöffnet ist. Der

Stellantrieb 1 ist über eine pneumatische Leitung 5 mit einem darin angeordneten Magnetventil 6 an dem Stelldruck-Ausgang 7 eines Stellungsreglers 8 angeschlossen, der an einem Zuluft-Eingang 9 mit Druckluft (Zuluft) versorgt wird. Ein Positionsgeber 10 erfasst die Ist-Position des Stellelements 2 und führt sie dem Stellungsregler 8 zu, der in Abhängigkeit von der Ist-Position und einer vorgebbaren Soll-Position an seinem Stelldruck-Ausgang 7 einen variablen Stelldruck einstellt, um das Stellelement 2 mit dem Ventil 3 in die Soll-Position, z. B. 95% der Betriebsendstellung, zu bewegen. Um eine Soll-Position vorzugeben, kann der Stellungsregler 8 über eine Kommunikationsleitung 11, z. B. eine 4-20 mA-Leitung, mit einem Leitsystem 12 verbunden sein.

Das Magnetventil 6 ist als Dreiwegeventil ausgebildet und erhält von dem Leitsystem 12 über eine Leitung 13 eine Versorgungsspannung Vs zugeführt.

Im Normalfall ist die Versorgungsspannung Vs eingeschaltet, so dass das Magnetventil 6 aktiviert ist und den Stelldruck-Ausgang 7 des Stellungsreglers 8 mit dem Stellantrieb 1 pneumatisch verbindet. Im Notfall schaltet das Leitsystem 12 die Versorgungsspannung Vs ab, so dass das dann deaktivierte Magnetventil 6 den Stellantrieb 1 von dem Stellungsregler 8 trennt und stattdessen über einen Magnetventil-Auslass 14 entlüftet. Der Stellantrieb 1 wird daraufhin drucklos und bewegt das Stellelement 2 mit dem Ventil 3, beispielsweise unter Einwirkung einer Feder in dem Stellantrieb 1, in die Sicherheitsstellung. Die Deaktivierung und spätere Wiederaktivierung des Magnetventils 6 kann zusätzlich auch an der Stelleinrichtung selbst vorgenommen werden, indem ein steuerbarer Schalter 15 im Verlauf der Leitung 13 geöffnet bzw. wieder geschlossen wird.

In einem von dem Leitsystem 12 automatisch in regelmäßigen Zeitabständen ausgelösten Partial-Stroke-Test wird das Auf/ Zu-Ventil 4 bei aktiviertem Magnetventil 6 kurzzeitig aus der jeweils aktuellen Position über einen Teil seines Stellweges bewegt und anschließend wieder zurück bewegt. Die Stellungsänderung ist dabei so gering, dass der laufende Betrieb der Anlage, in der das Ventil 3 eingebaut ist, nicht oder nur unwesentlich gestört wird. Bei jedem Test wird die erreichte Ist-Position des Stellelements 2 bzw. Ventils 3 z. B. über die Kommunikationsleitung 11 zu dem Leitsystem 12 übertragen und dort abgespeichert und protokolliert. Der Partial-Stroke-Test wird in Abhängigkeit davon als erfolgreich bewertet, dass eine vorgegebene Stellungsänderung innerhalb einer Mindestzeit erreicht wird oder dass die Stellungsänderung innerhalb einer vorgegebenen Zeit einen Mindestwert erreicht. Auf diese Weise kann festgestellt werden, wenn das Ventil 3 blockiert ist oder zu langsam reagiert.

Nach jedem oder jedem n-ten Partial-Stroke-Test wird die Funktionsfähigkeit des Magnetventils 6 getestet, wozu es deaktiviert wird. Das Leitsystem 12 erzeugt dazu ein Magnetventil-Testsignal MVT, mit dem der steuerbare Schalter 15 geöffnet wird. Das Magnetventil-Testsignal MVT wird dem steuerbaren Schalter 15 über einen Grenzwertschalter 16 zugeführt, der in der Betriebsstellung des Stellelements 2 geschlossen ist und bei einer vorgegebenen Stellung des Stellelements 2 öffnet. Die vorgegebene Stellung wird bei einer geringen Bewegung des Stellelements 2 von z. B. 10 bis 20% des Stellweges aus der Betriebsstellung heraus erreicht. Als Reaktion auf das von dem Leitsystem 12 erzeugte Magnetventil-Testsignal MVT, unterbricht der steuerbare Schalter 15 die Spannungsversorgung des Magnetventils 6, so dass dieses deaktiviert und in Folge der Stellantrieb 1 entlüftet wird. Daraufhin bewegt sich das Stellelement 2 bis zu der vorgegebenen Stellung, bei der der Grenzwertschalter 16 öffnet und den Weg des Magnetventil-Testsignals MVT zu dem steuerbaren Schalter 15 hin unterbricht. Der steuerbare Schalter 15 schließt daher wieder die Spannungsversorgung für das Magnetventil 6, welches dadurch aktiviert die pneumatische Verbindung zwischen dem Stellungsregler 8 und dem Stellantrieb 1 wieder herstellt, so dass sie Bewegung des Stellelements 2 gestoppt und umgekehrt wird. Dies führt dazu, dass der Grenzwertschalter 16 wieder schließt und das anstehende Magnetventil-Testsignal MVT wieder zu dem steuerbaren Schalter 15 durchschaltet, so dass dieser öffnet, das Magnetventil 6 deaktiviert wird und das Stellelement 2 wieder zu der vorgegebenen Stellung bewegt wird. Dieser Vorgang wiederholt sich solange, wie das Leitsystem 12 das Magnetventil-Testsignal MVT erzeugt, so dass das Stellelement 2 um die vorgegebene Stellung pendelt. Die dabei von dem Positionsgeber 10 erfasste Position wird über den Stellungsregler 8 an das Leitsystem 12 übertragen und dort zu Protokollzwecken abgespeichert.

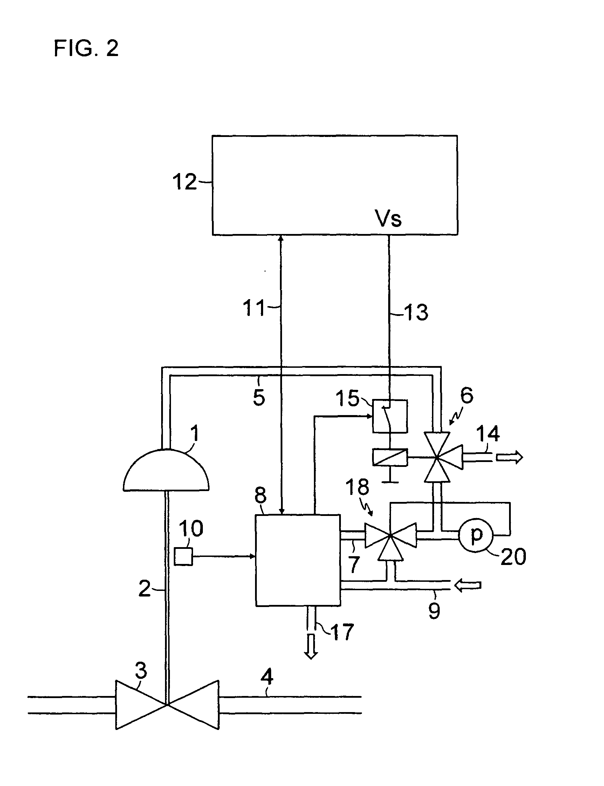

Bei der in Figur 2 gezeigten Stelleinrichtung erfolgen der Partial-Stroke-Test und der Test des Magnetventils 6 in einem einzigen Testablauf, wozu das Leitsystem 12 automatisch einen entsprechenden Befehl über die Kommunikationsleitung 11 an den Stellungsregler 8 abgibt. Dieser erzeugt daraufhin ein Steuersignal zum Öffnen des steuerbaren Schalters 15, so dass das Magnetventil 6 deaktiviert und als Folge dessen der Stellantrieb 1 entlüftet wird. Die daraufhin einsetzende Bewegung des Stellelements 2 wird von dem Positionsgeber 10 erfasst und dem Stellungsreglers 8 zugeführt. Dieser überwacht die Stellbewegung des Stellelements 2 auf Erreichen einer vorgegebenen parametrierbaren Wegänderung und erzeugt bei Erreichen dieser vorgegebenen Wegänderung ein Steuersignal zum Schließen des steuerbaren Schalters 15, so dass das Magnetventil 6 wieder aktiviert und die pneumatische Verbindung zwischen dem Stellungsregler 8 und dem Stellantrieb 1 wieder hergestellt wird. Der Stellungsregler 8 regelt jetzt das Stellelement 2 mit dem Ventil 3 wieder in die Betriebsstellung vor dem Test zurück, wobei auch jetzt die Stellbewegung erfasst wird. Der Stellungsregler 8 übermittelt die Testergebnisse zur weiteren Verarbeitung und Analyse an das Leitsystem 12.

Bei einer Störung des Stellungsreglers 8, beispielsweise beim Ausfall seiner Stromversorgung, kann es dazu kommen, dass er über einen Auslass 17 entlüftet, so dass der Stelldruck am Stelldruck-Ausgang 7 abfällt. Die Folge davon ist, dass die Druckluftversorgung des Stellantriebs 1 ausfällt und das Auf/ Zu-Ventil 3 in Sicherheitsstellung gebracht wird, ohne dass ein Notfall vorliegt. Um dies zu verhindern, liegt zwischen dem Zuluft-Eingang 9 des Stellungsreglers 8 und dem Magnetventil 6 eine steuerbare Ventilanordnung 18, die in dem geschilderten Störfall des Stellungsreglers 8 das Magnetventil 6 unmittelbar mit der Zuluft verbindet und so die Druckluftversorgung des Stellantriebs 1 aufrecht erhält. Die steuerbare Ventilanordnung 18 besteht aus einem zwischen dem Zuluft-Eingang 9, dem Stelldruck-Ausgang 7 und dem Magnetventil 6 liegenden Dreiwegeventil, welches das Magnetventil 6 entweder mit dem Stelldruck-Ausgang 7 des Stellungsreglers 8 oder unmittelbar mit der Zuluft verbindet.

Bei der in Figur 1 gezeigten Stelleinrichtung ist die Ventilanordnung 18 als Magnet-Dreiwegeventil ausgebildet, das über einen von dem Stellelement 2 betätigbaren Positions-Grenzwertsensor 19 in Form eines Grenzwertschalters an der Versorgungsspannung Vs angeschlossen ist. In der Betriebsstellung des Ventils 3 ist der Grenzwertschalter 19 öffnet, so dass das Magnet-Dreiwegeventil 18 deaktiviert ist und das Magnetventil 6 mit dem Stelldruck-Ausgang 7 des Stellungsreglers 8 verbindet. Wenn aufgrund einer Störung des Stellungsregler 8 dieser den Stellantrieb 1 über den Auslass 17 entlüftet und als Folge dessen das Stellelement 2 eine vorgegebene Verfahrposition von z. B. 95% der Betriebsendstellung erreicht, schließt der Grenzwertschalter 19, wobei das dann aktivierte Magnet-Dreiwegeventil 18 das Magnetventil 6 mit der Zuluft verbindet. Die Bewegung des Stellelements 2 wird dadurch gestoppt und in Richtung der Betriebsendstellung umgekehrt, so dass der Grenzwertschalter 19 wieder schließt und das daraufhin aktivierte Magnet-Dreiwegeventil 18 das Magnetventil 6 wieder mit dem Stelldruck-Ausgang 7 des Stellungsreglers 8 verbindet. Für die Dauer des Ausfalls der Druckluftversorgung des Stellantriebs 1 durch den Stellungsregler 8 kommt es also zu einer Pendelbewegung des Stellelements 2, die von dem Stellungsregler 8 detektiert und über die Kommunikationsleitung 11 an das Leitsystem 12 gemeldet werden kann. Diese Meldung kann beispielsweise auch über einen hier nicht gezeigten Hilfskontakt des Grenzwertschalters 19 in einem zu dem Leitsystem 12 führenden Hilfsstromkreis erfolgen, oder es wird z. B. der Strom in dem Verbindungsweg von der der Versorgungsspannung Vs zu dem Grenzwertschalters 19 oder, wie gestrichelt angedeutet, die elektrische Spannung an der Ventilanordnung 18 erfasst.

Wenn die Versorgungsspannung Vs ausfällt oder als Reaktion auf einen Notfall von dem Leitsystem 12 abgeschaltet wird, bleibt das Magnet-Dreiwegeventil 18 deaktiviert und das Magnetventil 6 entlüftet den Stellantrieb 1.

Bei der in Figur 2 gezeigten Stelleinrichtung wird die Ventilanordnung 18 von einem den Stelldruck am Magnetventil 6 erfassenden Druck-Grenzwertsensor 20 mechanisch angesteuert, wobei die Ventilanordnung 18 das Magnetventil mit der Zuluft verbindet, wenn der Druck-Grenzwertsensor 20 das Unterschreiten eines vorgegebenen Mindestdrucks detektiert. Auch hier kommt es für die Dauer des Ausfalls der Druckluftversorgung des Magnetventils 6 durch den Stellungsregler 8 zu einer Pendelbewegung des Stellelements 2, die von dem Stellungsregler 8 detektiert und an das Leitsystem 12 gemeldet werden kann. Die Meldung kann alternativ über einen hier nicht gezeigten Hilfskontakt des Druck-Grenzwertsensors 20 in einem zu dem Leitsystem 12 führenden Hilfsstromkreis erfolgen.

Der Druck-Grenzwertsensor 20 kann analog zu dem Grenzwertschalter 19 in Figur 1 ebenfalls als Grenzwertschalter ausgebildet sein, der öffnet, wenn der erfasste Stelldruck den vorgegebenen Mindestdruck unterschreitet.

Die in den Figuren 1 und 2 gezeigten Ventilanordnungen 18 mit Positions-Grenzwertsensor 19 bzw. Druck-Grenzwertsensor 20 können gegeneinander ausgetauscht werden oder zusammen, einander ergänzend, vorgesehen werden.

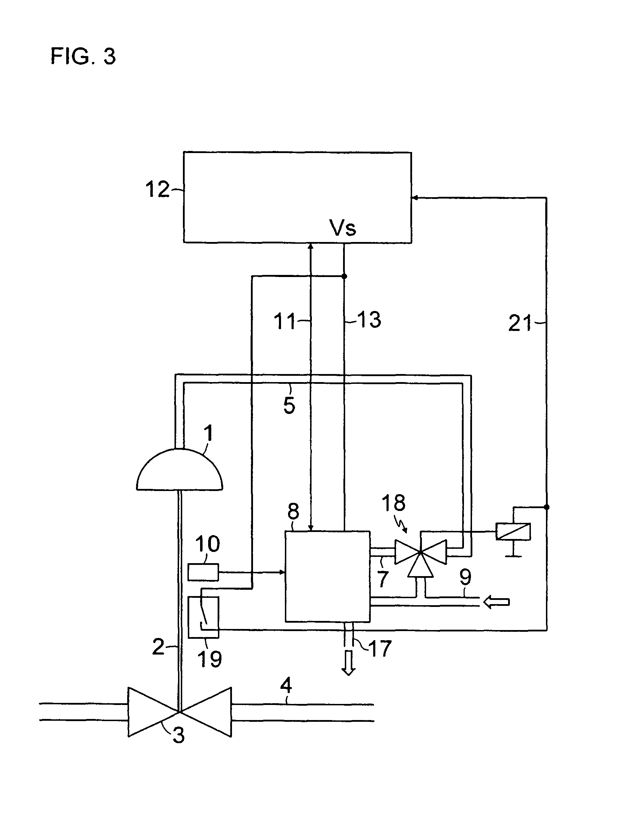

Figur 3 zeigt schließlich eine Stelleinrichtung ähnlich der in Figur 1 mit dem wesentlichen Unterschied, dass der Stellungsregler 8 selbst die Funktion des Magnetventils 6 übernimmt und dazu stromversorgungsseitig an der Versorgungsspannung Vs angeschlossen und dazu ausgebildet ist, bei Ausfall der Stromversorgung den pneumatischen Stellantrieb 1 zu entlüften. Fällt die Versorgungsspannung Vs aus oder wird sie abgeschaltet, so entlüftet der Stellungsregler 8 den Stellantrieb 1 über seinen Auslass 17, so dass das Ventil 3 in die Sicherheitsstellung fährt. Solange die Versorgungsspannung Vs an dem Stellungsregler 8 anliegt, regelt dieser die Ventilstellung entsprechend einem hinterlegten Sollwert, der um einen geringen Betrag, beispielsweise 3%, geringer als die Betriebsendstellung des Ventils 3 ist. Dadurch ist die Regelung ständig aktiv, was die Gefahr eines "Festklebens" der Ausgangsventile in der pneumatischen Ausgangsstufe des Stellungsreglers 8 verringert. Ein Partial-Stroke-Test kann wahlweise manuell über ein Bedienelement am Stellungsregler 8, durch ein über die Kommunikationsleitung 11 an den Stellungsregler 8 übertragenes Signal oder in regelmäßigen Abständen durch einen in dem Stellungsregler 8 enthaltenen Zeitgeber ausgelöst werden.

Wenn der Stellungsregler 8 aufgrund eines Fehlers oder einer Störung entlüftet, obwohl die Versorgungsspannung Vs anliegt und kein Notfall vorliegt, Bewegt sich das Stellelement 2 aus seiner Betriebsstellung heraus, bis der Positions-Grenzwertschalter 19 schließt und das Magnet-Dreiwegeventil 18 mit der Versorgungsspannung Vs verbindet. Das so aktivierte Magnet-Dreiwegeventil 18 schaltet den Stellantrieb 1 von dem Stelldruck-Ausgang 7 an die Zuluft 9, so dass das Stellelement 2 wieder zurück bewegt wird. Für die Dauer des Ausfalls des Stellungsreglers 8 kommt es also zu einer Pendelbewegung des Stellelements 2, die, soweit der Stellungsregler 8 noch dazu in der Lage ist, von diesem detektiert und über die Kommunikationsleitung 11 an das Leitsystem 12 gemeldet werden kann. Bei dem gezeigten Ausführungsbeispiel erfolgt die Meldung dadurch, dass Schalttätigkeit des Grenzwertschalters 19 über die elektrische Spannung an der Ventilanordnung 18 erfasst und über eine Meldeleitung 21 an das Leitsystems 12 gemeldet wird.

## Patentansprüche

1. Stelleinrichtung mit einem Auf/Zu-Ventil (3), das über einen pneumatischen Stellantrieb (1) mittels eines an dem Auf/Zu-Ventil (3) angreifenden Stellelements (2) verstellbar ist, einem Positionsgeber (10), der die Ist-Position des Stellelements (2) erfasst, und einem elektro-pneumatischen Stellungsregler (8), der über einen Zuluft-Eingang (9) mit Druckluft versorgt wird und in Abhängigkeit von der Ist-Position und einer Soll-Position an einem Stelldruck-Ausgang (7) einen Stelldruck erzeugt, der dem Stellantrieb (1) über ein aktiviertes Magnetventil (6) zugeführt wird, welches zu seiner Aktivierung mit einer Versorgungsspannung (Vs) versorgt wird und im Notfall zur Entlüftung des Stellantriebs (1) durch Abschalten der Versorgungsspannung (Vs) deaktivierbar ist, **dadurch gekennzeichnet, dass** zwischen dem Zuluft-Eingang (9) des Stellungsreglers (8) und dem Magnetventil (6) eine steuerbare Ventilanordnung (18) liegt, die durch einen von dem Stellelement (2) betätigbaren Positions-Grenzwertsensor (19) und/oder einen den Stelldruck am Magnetventil (6) erfassenden Druck-Grenzwertsensor (20) angesteuert wird und das Magnetventil (6) unmittelbar mit der Zuluft verbindet, wenn der Positions-Grenzwertsensor (19) das Erreichen einer vorgegebenen Verfahrposition des Stellelements (2) oder der Druck-Grenzwertsensor (20) das Unterschreiten eines vorgegebenen Mindestdrucks detektieren.

2. Stelleinrichtung nach Anspruch 1, **dadurch gekennzeichnet, dass** die steuerbare Ventilanordnung (18) aus einem zwischen dem Zuluft-Eingang (9), dem Stelldruck-Ausgang (7) und dem Magnetventil (6) liegenden Dreiwegeventil besteht.

3. Stelleinrichtung nach Anspruch 1 oder 2, **dadurch gekennzeichnet, dass** die Ventilanordnung (18) elektrisch steuerbar und über den als Grenzwertschalter ausgebildeten Grenzwertsensor (19, 20) mit der Versorgungsspannung (Vs) verbunden ist.

4. Stelleinrichtung nach Anspruch 3, **gekennzeichnet durch** einen Hilfsstromkreis zur Erfassung der Schalttätigkeit des Grenzwertschalters.

5. Stelleinrichtung nach Anspruch 1 oder 2, **dadurch gekennzeichnet, dass** der Druck-Grenzwertsensor (20) mechanisch auf die Ventilanordnung (18) wirkt.

6. Stelleinrichtung nach einem der vorangehenden Ansprüche, **dadurch gekennzeichnet, dass** der Stellungsregler (8) dazu ausgebildet ist, eine durch ein Hin- und Herschalten der steuerbaren Ventilanordnung (18) resultierende Pendelbewegung des Stellelements (2) zu erfassen.

7. Stelleinrichtung mit einem Auf/Zu-Ventil (3), das über einen pneumatischen Stellantrieb (1) mittels eines an dem Auf/Zu-Ventil (3) angreifenden Stellelements (2) verstellbar ist, einem Positionsgeber (10), der die Ist-Position des Stellelements (2) erfasst, und einem elektro-pneumatischen Stellungsregler (8), der über einen Zuluft-Eingang (9) mit Druckluft versorgt wird und in Abhängigkeit von der Ist-Position und einer Soll-Position an einem Stelldruck-Ausgang (7) einen Stelldruck für den Stellantrieb (1) erzeugt, wobei der elektro-pneumatischen Stellungsregler (8) mit dem Stellantrieb (1) verbunden ist, stromversorgungsseitig an einer Versorgungsspannung (Vs) angeschlossen ist und dazu ausgebildet ist, bei Ausfall der Stromversorgung den Stellantrieb (1) zu entlüften, **dadurch gekennzeichnet, dass** zwischen dem Zuluft-Eingang (9) des Stellungsreglers (8) und dem Stellantrieb (1) eine elektrisch aktivierbare Ventilanordnung (18) liegt, die im passiven Zustand den Stellantrieb (1) mit dem Stelldruck-Ausgang (7) und im aktiven Zustand unmittelbar mit der Zuluft verbindet und durch einen von dem Stellelement (2) betätigbaren Positions-Grenzwertsensor (19) und/oder einen den Stelldruck erfassenden Druck-Grenzwertsensor (20) angesteuert wird, wobei der Grenzwertsensor (19, 20) als ein die Ventilanordnung (18) mit der Versorgungsspannung (Vs) verbindender Grenzwertschalter ausgebildet ist, der schließt, wenn das Stellelement (2) die vorgegebene Verfahrposition erreicht oder der erfasste Stelldruck den vorgegebenen Mindestdruck unterschreitet.

8. Stelleinrichtung nach Anspruch 7, **dadurch gekennzeichnet, dass** die steuerbare Ventilanordnung (18) aus einem zwischen dem Zuluft-Eingang (9), dem Stelldruck-Ausgang (7) und dem Stellantrieb (1) liegenden Dreiwegeventil besteht.

9. Stelleinrichtung nach Anspruch 7 oder 8, **gekennzeichnet durch** einen Hilfsstromkreis zur Erfassung der Schalttätigkeit des Grenzwertschalters.

10. Stelleinrichtung nach Anspruch 7, 8 oder 9, **dadurch gekennzeichnet, dass** der Stellungsregler (8) dazu ausgebildet ist, eine durch ein Hin- und Herschalten der steuerbaren Ventilanordnung (18) resultierende Pendelbewegung des Stellelements (2) zu erfassen.

## Claims

1. Actuator device having an open/close valve (3) which can be adjusted by a pneumatic actuating drive (1) by means of an actuating element (2) which acts on the open/close valve (3), having a position sensor (10) which records the actual position of the actuating element (2), and having an electropneumatic position controller (8) which is supplied with compressed air via a feed air inlet (9) and generates an actuating pressure at an actuating pressure outlet (7) as a function of the actual position and a setpoint position, said actuating pressure being supplied to the actuating drive (1) via an activated solenoid valve (6) which, in order to be activated, is supplied with a supply voltage (Vs) and, in an emergency, can be deactivated by switching off the supply voltage (Vs) in order to vent the actuating drive (1), **characterized in that** there is a controllable valve arrangement (18) between the feed air inlet (9) of the position controller (8) and the solenoid valve (6), said valve arrangement being actuated by a position limit value sensor (19) which can be operated by the actuating element (2) and/or a pressure limit value sensor (20) which records the actuating pressure at the solenoid valve (6) and connects the solenoid valve (6) directly to the feed air when the position limit value sensor (19) detects that a prespecified movement position of the actuating element (2) has been reached or the pressure limit value sensor (20) detects that a prespecified minimum pressure has been undershot.

2. Actuator device according to Claim 1, **characterized in that** the controllable valve arrangement (18) comprises a three-way valve which is situated between the feed air inlet (9), the actuating pressure outlet (7) and the solenoid valve (6).

3. Actuator device according to Claim 1 or 2, **characterized in that** the valve arrangement (18) is electrically controllable and is connected to the supply voltage (Vs) via the limit value sensor (19, 20) which is in the form of a limit value switch.

4. Actuator device according to Claim 3, **characterized by** an auxiliary circuit for recording the switching activity of the limit value switch.

5. Actuator device according to Claim 1 or 2, **characterized in that** the pressure limit value sensor (20) acts mechanically on the valve arrangement (18).

6. Actuator device according to one of the preceding claims, **characterized in that** the position controller (8) is designed to record an oscillating movement of the actuating element (2) which results from the controllable valve arrangement (18) being switched back and forth.

7. Actuator device having an open/close valve (3) which can be adjusted by a pneumatic actuating drive (1) by means of an actuating element (2) which acts on the open/close valve (3), having a position sensor (10) which records the actual position of the actuating element (2), and having an electropneumatic position controller (8) which is supplied with compressed air via a feed air inlet (9) and generates an actuating pressure for the actuating drive (1) at an actuating pressure outlet (7) as a function of the actual position and a setpoint position, with the electropneumatic position controller (8) being connected to the actuating drive (1), being connected at the power supply end to a supply voltage (Vs) and being designed to vent the actuating drive (1) if the power supply fails, **characterized in that** there is a valve arrangement (18) between the feed air inlet (9) of the position controller (8) and the actuating drive (1), it being possible for said valve arrangement to be electrically activated, said valve arrangement connecting the actuating drive (1) to the actuating pressure outlet (7) in the passive state and directly to the feed air in the active state, and being actuated by a position limit value sensor (19) which can be operated by the actuating element (2) and/or a pressure limit value sensor (20) which records the actuating pressure, with the limit value sensor (19, 20) being in the form of a limit value switch which connects the valve arrangement (18) to the supply voltage (Vs) and which closes when the actuating element (2) reaches the prespecified movement position or the recorded actuating pressure falls below the prespecified minimum pressure.

8. Actuator device according to Claim 7, **characterized in that** the controllable valve arrangement (18) comprises a three-way valve which is situated between the feed air inlet (9), the actuating pressure outlet (7) and the actuating drive (1).

9. Actuator device according to Claim 7 or 8, **characterized by** an auxiliary circuit for recording the switching activity of the limit value switch.

10. Actuator device according to Claim 7, 8 or 9, **characterized in that** the position controller (8) is designed to record an oscillating movement of the actuating element (2) which results from the controllable valve arrangement (18) being switched back and forth.

## Revendications

1. Dispositif de réglage ayant une vanne ( 3 ) ouverte/fermée qui peut, par un actionneur ( 1 ) pneumatique, être réglée au moyen d'un élément ( 2 ) de réglage attaquant la vanne ( 3 ) ouverte/fermée, un indicateur ( 10 ) de position qui détecte la position réelle de l'élément ( 2 ) de réglage et un régleur ( 8 ) électropneumatique de position qui est alimenté en air comprimé par une entrée ( 9 ) d'air d'admission et qui produit, en fonction de la position réelle et d'une position de consigne à une sortie ( 7 ) de pression de réglage, une pression de réglage qui est envoyée à l'actionneur ( 1 ) par une électrovanne ( 6 ) activée, laquelle est, pour son activation, alimentée en une tension ( Vs ) d'alimentation et peut, en cas d'urgence, être désactivée pour la mise à l'atmosphère de l'actionneur ( 1 ) par interruption de la tension ( Vs ) d'alimentation, **caractérisé en ce qu'**il y a entre l'entrée ( 9 ) d'air d'admission du régleur ( 8 ) de position et l'électrovanne ( 6 ) un agencement ( 8 ) de vanne, qui peut être commandé et qui est commandé par un capteur ( 19 ) de valeur limite de position pouvant être actionné par l'élément ( 2 ) de réglage et/ou par un capteur ( 20 ) de valeur limite de pression détectant la pression de réglage à l'électrovanne ( 6 ) et qui relie l'électrovanne ( 6 ) directement à l'air d'admission, lorsque le capteur ( 19 ) de valeur limite de position détecte une position de déplacement prescrite de l'élément ( 2 ) de réglage ou lorsque le capteur ( 20 ) de valeur limite de pression détecte que l'on est passé en dessous d'une pression minimum prescrite.

2. Dispositif de réglage suivant la revendication 1, **caractérisé en ce que** l'agencement ( 8 ) de vanne qui peut être commandé est constitué d'une vanne à trois voies se trouvant entre l'entrée ( 9 ) d'air d'admission, la sortie ( 7 ) de pression de réglage et l'électrovanne ( 6 ).

3. Dispositif de réglage suivant la revendication 1 ou 2, **caractérisé en ce que** l'agencement ( 18 ) de vanne peut être commandé électriquement et est relié à la tension ( Vs ) d'alimentation par le capteur ( 19, 20 ) de valeur limite constitué en commutateur à valeur limite.

4. Dispositif de réglage suivant la revendication 3, **caractérisé par** un circuit auxiliaire de détection de l'activité de commutation du commutateur à valeur limite.

5. Dispositif de réglage suivant la revendication 1 ou 2, **caractérisé en ce que** le capteur ( 20 ) de valeur limite de pression agit mécaniquement sur l'agencement ( 18 ) de vanne.

6. Dispositif de réglage suivant l'une des revendications précédentes, **caractérisé en ce que** le régleur ( 8 ) de position est constitué pour détecter un mouvement pendulaire de l'élément ( 2 ) de réglage résultant d'une commutation en va-et-vient de l'agencement ( 18 ) de vanne qui peut être commandé.

7. Dispositif de réglage ayant une vanne ( 3 ) ouverte/fermée qui peut être réglée par un actionneur ( 1 ) pneumatique au moyen d'un élément ( 2 ) de réglage attaquant la vanne ( 3 ) ouverte/fermée, un indicateur ( 10 ) de position qui détecte la position réelle de l'élément ( 2 ) de réglage et un régleur ( 8 ) électropneumatique de position qui est alimenté en air comprimé par une entrée ( 9 ) d'air d'admission et qui, en fonction de la position réelle et d'une position de consigne, produit sur une sortie ( 7 ) de pression de réglage une pression de réglage de l'actionneur ( 1 ), le régleur ( 8 ) électropneumatique de position étant relié à l'actionneur, ( 1 ) étant raccordé du côté de l'alimentation en courant électrique à une tension ( Vs ) d'alimentation et étant constitué pour, en cas de défaillance de l'alimentation en courant, mettre l'actionneur ( 1 ) à l'atmosphère, **caractérisé en ce qu'**il y a entre l'entrée ( 9 ) d'air d'admission du régleur ( 8 ) de position et l'actionneur ( 1 ) un agencement ( 8 ) de vanne qui peut être activé électriquement et qui, à l'état passif, relie l'actionneur ( 1 ) à la sortie ( 7 ) de pression de réglage et, à l'état actif, directement à l'air d'admission et est commandé par un capteur ( 19 ) de valeur limite de position pouvant être actionné par l'élément ( 2 ) de réglage et/ou par un capteur ( 20 ) de valeur limite de pression détectant la pression de réglage, le capteur ( 19, 20 ) de valeur limite étant constitué sous la forme d'un commutateur de valeur limite reliant l'agencement ( 18 ) de vanne à la tension ( Vs ) d'alimentation et se fermant, lorsque l'élément ( 2 ) de réglage atteint la position de déplacement prescrit ou lorsque la pression de réglage détectée devient inférieure à la pression minimum prescrite.

8. Dispositif de réglage suivant la revendication 7, **caractérisé en ce que** l'agencement ( 18 ) de vanne pouvant être commandé est constitué d'une vanne à trois voies se trouvant entre l'entrée ( 9 ) d'air d'admission, la sortie ( 7 ) de pression de réglage et l'actionneur ( 1 ).

9. Dispositif de réglage suivant la revendication 7 ou 8, **caractérisé par** un circuit auxiliaire de détection de l'activité de commutation du commutateur à valeur limite.

10. Dispositif de réglage suivant la revendication 7, 8 ou 9, **caractérisé en ce que** le régleur ( 8 ) de position est constitué pour détecter un mouvement pendulaire de l'élément ( 2 ) de réglage résultant d'une commutation en va-et-vient de l'agencement ( 18 ) de vanne qui peut être commandé.
